# EUROPEAN PATENT SPECIFICATION

(11) **EP 3 498 095 B1**
(45) Date of publication and mention of the grant of the patent: **27.04.2022**
(21) Application number: 18213012.0
(22) Date of filing: 17.12.2018
(51) Int. Cl.: A01K 97/12, F16B 2/00

(54) **A FISHING LINE MOTION SENSOR**
ANGELSCHNURBEWEGUNGSSENSOR
CAPTEUR DE MOUVEMENT DE LIGNE DE PÊCHE

(30) Priority: 18.12.2017 GB 201721166
(43) Date of publication of application: 19.06.2019
(73) Proprietor: Wolf International Limited, London WC2H 9JQ (GB)
(72) Inventor: Fox, Clifford Royston, Upminster, RM14 1TP (GB); Fox, Richard Royston, Brentwood, Essex, CM14 4HA (GB); Coombes, Neil John, Romford, Essex, RM5 2UL (GB)
(74) Representative: Carpmaels & Ransford LLP

(56) References cited:
- EP-A1- 0 749 687
- EP-A1- 3 170 390
- EP-A2- 1 614 348
- GB-A- 2 430 132
- GB-A- 2 515 467

## Description

### Field of the Disclosure

The invention relates to a detector for detecting motion, including low level vibration, of a fishing line. More particularly, it relates to a detector with two sensors and a construction that is especially suitable for outdoor operation.

### Background

Various types of electronic fishing appliances have been developed for assisting anglers whilst fishing. These electronic fishing appliances come in various forms and serve a wide variety of functions. One example is an electronic bite detector for indicating line motion resulting from a fish bite on a fishing line. Clearly, such a bite detector will generally be used in wet and humid environments.

Typically, a bite detector uses an electronic sensing device to detect line motion. Such a sensing device will normally comprise sensitive electronic components that can be damaged by contact with liquids. A motion sensor is one example of a sensitive electronic component of the sensing device of a bite detector that can be damaged by contact with liquids.

Unfortunately, due to the environment in which bite detectors are used, liquids often get into contact with the sensitive electronic components of the bite detector. The contact can arise due to water leaking into the interior of the casing of a bite detector. Alternatively, water can be condensed out of air that gets into the interior through ventilation holes or other gaps in the casing.

Known solutions to this problem include enclosing sensitive electronic components in a sealed dry space. The dry space can be created by enclosing a drying material and the sensitive electronic components in a sealed volume, or by enclosing the sensitive electronic components in a sealed volume in a dry gas environment.

However, sensing devices for bite detectors, by their nature, are designed to couple motion sensors to moving fishing lines. To couple motion from an external component to an enclosed sensing device will require moving seals, which are expensive, and which will require a lot of maintenance if they are to last a long time. Alternatively, some electronic components may be placed outside the dry space but this will leave the exposed components vulnerable to liquid damage or mechanical damage.

Addressing the problem of how to protect a sensing device for a bite detector against liquid damage is made more difficult by the fact that considered solutions must not overly reduce the bite detector sensitivity.

Moreover, it would be advantageous to improve the reliability and sensitivity of the bite detector. Additionally, since bite detectors are complex and valuable, it would also be preferably to have a effective means to protect them from theft or unauthorized access.

Therefore, there is a need for a system that addresses at least some of these problems.

EP0749687A1 relates to a fish-bite indicator according to the preamble of claim 1 and which has a housing, a sensor contact part which is outside the housing interior and which is in contact with a line of a fishing rod when the indicator is in use sensor circuitry inside the housing is coupled to the sensor contact part to produce an electrical signal in dependence upon a movement of such a line, and battery connection points are connected to the sensor circuitry and are connected to a battery when the indicator is in use. EP1614348A2 Angling apparatus comprising a fish-bite detector and a remote control for the detector, both the detector and the remote control having a transceiver. The two transceivers are constructed for twoway communication between them, the fish-bite detector having at least one operating parameter adjustment device enabling that parameter to be adjusted, such as for example the sensitivity of the detector, and being connected to the transceiver of the detector. EP3170390A1 relates to a bite indicator comprises a detecting/monitoring unit comprising a housing including guide means through which the fishing line is retained and guided on or towards a stylus. GB2430132A relates to a bite indicator is described which comprises a casing, a rest on the casing for a rod carrying a fishing line, a stylus tip mounted in the casing for contacting the fishing line of a rod resting on the casing so as to vibrate in response to movement of the fishing line.

### Summary of the Disclosure

The present invention is defined by claim 1 with further optional features defined by the dependent claims.

According to a first aspect of the invention, there is a sensing device comprising a first sensor, a housing surrounding the first sensor and a moving guide adapted to contact a fishing line, wherein the first sensor is magnetically coupled to, or configured to optically monitor, the moving guide, and the first sensor is configured to detect motion of the moving guide, wherein the sensing device further comprises a second sensor, and wherein the second sensor comprises a piezoelectric vibration sensor, and wherein the second sensor is magnetically coupled to the moving guide. Since the first sensor is not coupled with the moving guide, there is no mechanical link between the first sensor and the moving guide. This constructions provides increased design freedom as the lack of coupling means the first sensor can be located anywhere where the sensor's operation is not impeded. Advantageously, the first sensor is located so that it is protected from damage, such as damage from contact with water or mechanical damage. Mechanical damage from violent line motion, such as the violent line motion associated with a fish bite on the fishing line is prevented due to the lack of physical coupling. Since all sensor have strengths and advantages, having more than one sensor allows the device to counteract for any weaknesses in a single sensor. It also means that the signals from the two sensors can be compared or combined as necessary to provide the desired response. The reliability and sensitivity of the detector can thus be improved. The vibration sensor enables a good sensitivity and as it may be a different sensor modality to the first sensor it will not be affected by the same weakness as the first sensor. The vibration sensor can be configured to detect vibrational motions that do not cause the moving guide to rotate. Such vibrational motions include low level vibrations of the fishing line. The addition of the vibration sensor therefore results in the sensing device having an increased sensitivity. The use of a piezoelectric second sensor affords electrical efficiency and provides a convenient electrical output. It also provides a sensor with a broad dynamic range. The magnetic coupling of the second sensor allows the second sensor to be moved out of direct contact with the outer environment without requiring moving seals. The risk of liquid damage is therefore reduced. Magnetic coupling also prevents excessive stress being applied to the second sensor ensuring a rugged system with high sensitivity.

According to one alternative defined in the invention, the first sensor is magnetically coupled to the moving guide. The magnetic coupling enables the sensor to be well coupled to the moving guide without required the sensor to be in physical contact with the outer environment. The penetrative nature of magnetic fields also means that the coupling will function even if detritus or liquids get between the sensor and the moving guide.

According to another alternative defined in the invention, the first sensor is configured to optically monitor the moving guide. Optical monitoring provides high accuracy in assessment of motion. Sensing motion by optically monitoring does have additional moving parts and, since it is not require magnetic components, will not attract magnetic detritus nor affect nearby components that are sensitive to magnetic fields.

Optionally, the moving guide comprises a rolling guide. This enables convenient coupling to a fishing guide and enables the most common motion of the fishing line to be well sensed by the motion sensors.

Optionally, the moving guide comprises at least one magnet. The magnet can be sealed and risk of damage from exposure to the environment can be minimized. Damage to the magnet from magnetic debris attracted by the magnet or the outer environment is also reduced.

Optionally, the at least one magnet comprises a plurality of magnets. Having multiple magnets means that the accuracy of the device is increased as the change in magnetic flux, be that strength and/or orientation, can be used to infer the position since the magnetic configuration is known. The magnets can be shaped, orientated, and have magnetic properties as required to achieve the desired accuracy. The magnetic configurations used in the sensing device may use one of 1, 2, 3, 4, 5, 6 or more magnets.

Optionally, the at least one magnet is comprises 4 magnets. 4 magnets has been found to be provide the desired accuracy without requiring an unduly complex magnetic configuration.

Optionally, the first sensor is configured to detect the rotation of the moving guide. Measuring the rotation provides a direct measure of the motion of the fishing line and helps reduce the rate of false positives arising from external motions arising in the fishing environment.

Optionally, the adjustment of the sensitivity is set by combining or interpolating signals, or switching between signals from, the first and second sensor. This ensures that the requested sensitivity is achieved in a way that makes good use of the signals from the relevant sensors. The combination can also be used to extend the dynamic range of the sensing device or to improve the reliability of the signal. The signals may be processed to improve confidence in the combined signal.

Optionally, the first and/or the second sensor is sealed from the outer environment. Sealing the outer environment from the sensors further reduces the risk of the environment adversely affecting the sensitive electronic components. The seal formed when sealing may have some limited ventilation to allow drying should a liquid somehow get inside. Alternatively the seal may be a hermetic seal, or a seal satisfying the IEC standardized International Protection Code system IP66 standard.

Optionally, all sensitive electronic components are sealed from the outer environment. This construction means that all of the sensitive electronic components can be sealed, thereby reducing the risk of liquid damage to a minimum. This thus improves the life time of the device.

Optionally, the sensitivity of the sensing device can be adjusted. This is particularly useful to avoid signals arising from the environment causing false signals. In quiet locations and/or when the bite detector is used with fishing lines in water bodies with slow water currents the sensitivity of the sensing device can be adjusted lower. The sensitivity of the device may be adjusted manually or automatically using data from other sources or devices.

Optionally, the sensing device is configured such that a signal produced by the sensing device is representative of the motion of a fishing line. This makes the analysis of the motion easier and makes it easier to discriminate motion signals arising from environment sources from motion signals arising due to fish bites.

Optionally, the signal is an analogue electrical signal. This ensures that the electronic processing or analysis of the signals is easily completed without having to decode digital signals.

Optionally, the sensing device is configured to be controlled by a remote control. This ensures that the sensing device can be controlled without a user having to approach it. This is especially important when using multiple bite detectors each containing the sensing device, or if said bite detectors are in difficult or inaccessible locations.

Optionally, there is a bite detector comprising the above-mentioned sensing device. Of course, multiple sensing devices may also be used in a single bite detector.

Optionally, the bite detector comprises a quick-release spigot for coupling to a first bank stick. This ensures that the bite detector does not have to be screwed in to the bank stick. Since the bite detector will not rotate as it is attached this makes it easier to attack to the bank stick especially if the bite detector is already attached to other components. Additionally, it ensures that the attached bite detector is maintained in the correct orientation, to let users observe the viewable display or indicators, as when attached.

Optionally, the bite detector is configured for screw coupling to a second bank stick. Optionally, the bite detector is configured for quick-release and screw coupling to first and second bank sticks respectively. The bite detector is therefore attachable to both new quick-release bank stick and existing standard bank stick. A user therefore can use whatever bank stick is required and does not have to replace their existing bank sticks to use the bite detectors.

Optionally, there is a device configured to couple via a quick-release mechanism to the bite detector.

Optionally, the bite detector has a port configured to couple to at least one ancillary fishing accessory. This ensures that devices can be electronical linked to ancillary fishing accessory, such as a fishing swinger or hanger or any other ancillary fishing accessory. The bite detector therefore serves as a local hub to allow other devices that may be of very simple design to be linked to the bite detector. This coupling also has the effect of letting appliances that cannot directly wirelessly connect to a remote control, termed herein pluggable devices, connect to the remote control. When the bite detector is configured to communicate to other devices on a wireless network the bite detector effectively serves to connect the pluggable device into the wireless network.

Optionally, the bite detector is configured to change an operational parameter of the coupled at least one ancillary fishing accessory. This ensures that devices can be controlled through the bite detector. This is useful in cases in which adjustment of the ancillary fishing accessory is awkward or likely to alert nearby fish to the angler's presence. It is also especially useful in situations in which the control interface of the ancillary fishing accessory has been damaged or the user does not know how to control it.

Optionally, the bite detector is configured to change an operational parameter of the coupled at least one ancillary fishing accessory to harmonize with an operational parameter of the bite detector. This ensures that even pluggable devices produce a uniform output. For example, all connected devices may turn green to distinguish them from nearby blue lights. Additionally, the connected devices may be put into a particular mode such as an alarm mode to draw the attention of a user, a security mode for detecting unauthorized access, or a silent mode.

Optionally, the bite detector is configured to receive data from the coupled at least one ancillary fishing accessory. This serves to ensure that signals from even pluggable device are recorded and available for analysis.

Optionally, the at least one ancillary fishing accessory comprises a fishing hanger or a fishing swinger. These ancillary fishing accessories especially benefit from being controlled as they are often switched between fishing rigs and may need reconfiguring every time they are switched.

Optionally, the coupling of the at least one ancillary fishing accessory to the bite detector is by a physical coupling. Therefore, the ancillary fishing accessory does not require wireless connection components, which ensures that cheaply produced ancillary fishing accessories can be coupled.

Optionally, the physical coupling comprises a port that comprises two electrical connections. Preferably, the physical coupling comprises a port that comprises four electrical connections. Optionally, the physical coupling comprises a port that comprises two channels. These configurations ensures sufficient contacts and communications without having connections so close that there likely debris will short the contacts.

Optionally, the physical coupling comprises a port that comprises a 2.5 mm jack. This is industry standard and therefore enables other ancillary fishing accessories to be connected.

Optionally, the port is configured to recognize an ancillary fishing accessory that is connected. This enables a user to connect ancillary fishing accessories without having to reload or set-up the bite detector.

Optionally, the port is configured to send appropriate control signals to a recognized connected ancillary fishing accessory. This ensures that the connected ancillary fishing accessories are appropriately powered, which ensures they are able to function and but not damaged by excess voltage or current.

Optionally, the bite detector is configured to communicate with a remote control. The remote control allows the user to conveniently communicate with the bite detector without having to physically gain access to it. This is further advantageous if a user interface of the bite detector is damaged, worn, or if the user does not know how to configure the bite detector.

Optionally, the bite detector is configured to relay a communication that was issued from a remote control. This enables the remote control range to be extended.

Optionally, the relayed issued communication is directed to at least one ancillary fishing accessory. This ability allows a remote control to control pluggable devices.

Optionally, the bite detector is configured to relay a communication that is intended for a remote control. This allows signals to be forwarded on to devices situated beyond the range of the device from which the signal originated.

Optionally, the relayed communication came from at least one ancillary fishing accessory. This allows information from pluggable devices to be acquired and utilized.

Optionally, the bite detector is configured to issue a communication to cause a remote control to alert a user to a detected event at the bite detector. Thereby alerting the user. The alert can be aural such as beeping, visual such as a led changing state, or physical such as shaking. Silent operation is therefore permitted which is especially advantageous at night.

Optionally, the issued communication includes data to identify the bite detector. This is important if a fishing rig comprises several bite detectors, especially if the bite detectors are well spaced apart as it ensures the angler is quickly directed to the appropriate bite detector.

Optionally, the detected event in a detected bite. Though other signals such as authorized access, or low battery may also be detected events.

Optionally, the bite detector is configured so that an operational parameter can be adjusted by remote control. This ensures full remote control and means than no access to the bite detector is required for the majority of its operation. For example, an alarming bite detector can be conveniently muted from the remote control.

Optionally, the bite detector is configured to respond to a detected event by emitting a light, generating a noise, or vibrating. The method of alerting the user can be adjusted according to the local environment and conditions.

Optionally, the bite detector is illuminated and configured so that the colour of the emitted light can be adjusted. This enables rapid identification of the bite detector and can also indicate the state of the bite detector or connected accessories.

Optionally, the bite detector illumination is automatically adjusted according to the local environment or current time. This reduces the strain on the eye of anyone looking at the notification system and prevents the illumination dazzling the user, or being too dim to read.

Optionally, the bite detector is configured to be at least one of sealed, buoyant, and self-uprighting when floating in water. This construction helps mitigate against damage should the bite detector be dropped into mud or water.

Optionally, the bite detector comprises a body comprising molded cells. This provides protection without adding weight or substantial manufacturing cost to the remote control.

Optionally, the molded cells define nested compartments. This affords increased protection by defining a series of inner compartments.

Optionally, the molded cells cooperate to prevent ingress of water or detritus into body. Thus preventing damage to the sensitive electronics inside.

Optionally, the bite detector is illuminated and configured to display a symbol when the illumination is active. This helps identify bite detectors of the current construction which is advantageous at night. This is especially advantageous when one or more of the bite detectors of the current construction must be positioned in a certain pattern to ensure the network they provide has the desired coverage.

Optionally, the bite detector is configured to turn to an inactive state when placed in a protective case. This ensures the battery of the bite detector is not depleted by activation when in storage. This ensures the bite detector is always active when deployed which is convenient for the user. The protective case may be made of polypropylene to provide the flexibility to allow it to easily couple with the bite detector.

Optionally, there is an ancillary fishing accessory configured to communicate to the above-mentioned bite detector via the above-mentioned port.

Optionally, there is a remote control configured to control the above-mentioned bite detector.

Optionally, there is a kit comprising the above-mentioned bite detector and at least one ancillary fishing accessory configured to couple to the bite detector.

Optionally, there is a kit comprising the above-mentioned bite detector and a remote control configured to control the above-mentioned bite detector.

### Brief Description of Drawings

The invention is described below by way of example only with reference to the following figures, wherein:
Figure 1 is a block diagram of a bite detector, according to the first aspect of the present invention.
Figure 2 is a block diagram of the second sensor of the bite detector
Figure 3 is a projection view of a bite detector according to the first aspect of the present invention.
Figure 4 is a bottom view of the bite detector.
Figure 5 is an exploded view of a first quick release mechanism.
Figure 6 is an exploded view of a second quick release mechanism.
Figure 7 is an exploded view of a second quick release mechanism and a bite detector.
Figure 8 shows a series of side views to show the steps to couple the bite detector to the second quick release mechanism,
Figure 9 shows the bite detector of figure 3 with a passive infrared (PIR) sensor connected and an adaptable multi-colour fishing hanger connected.
Figure 10 is a projection view of the remote control, displaying the front, left, and bottom face.
Figure 11 is a projection view of the remote control, displaying the front, right, and bottom face.
Figure 12 is a front view of a section of the remote control, displaying an upper section of the front face.
Figure 13 is a block diagram showing the network layout of the remote control and several electronic fishing appliances.
Figure 14 is an image of a kit comprising the remote control, a bivvy light, a wireless PIR sensor, and the bite detector with a wired PIR sensor and multicolour fishing hanger.
Figure 15 provides a flow chart of the procedure to pair a bite detector with a remote control.

Similar features in the figures are referred to by similar reference numerals.

### Detailed Description

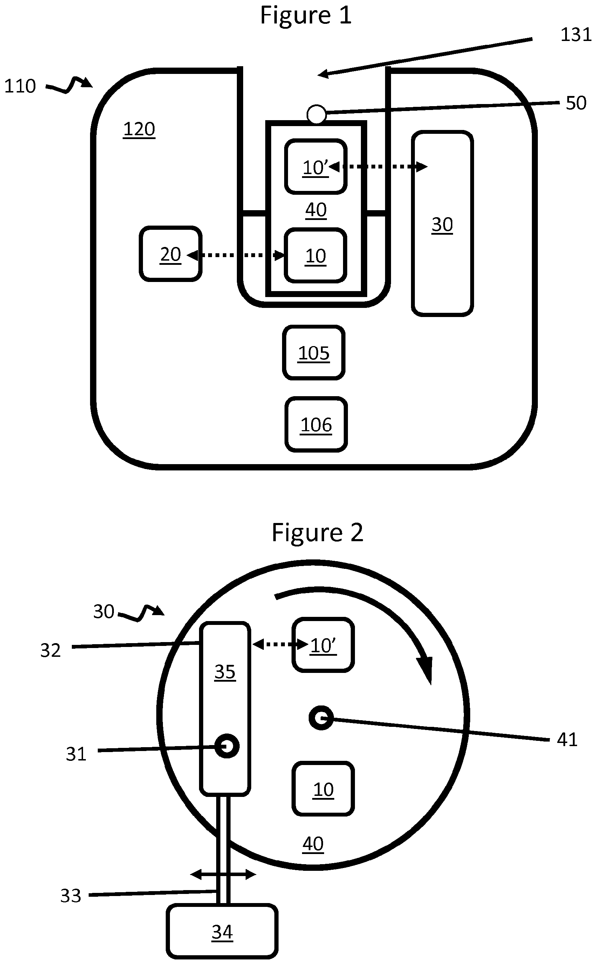

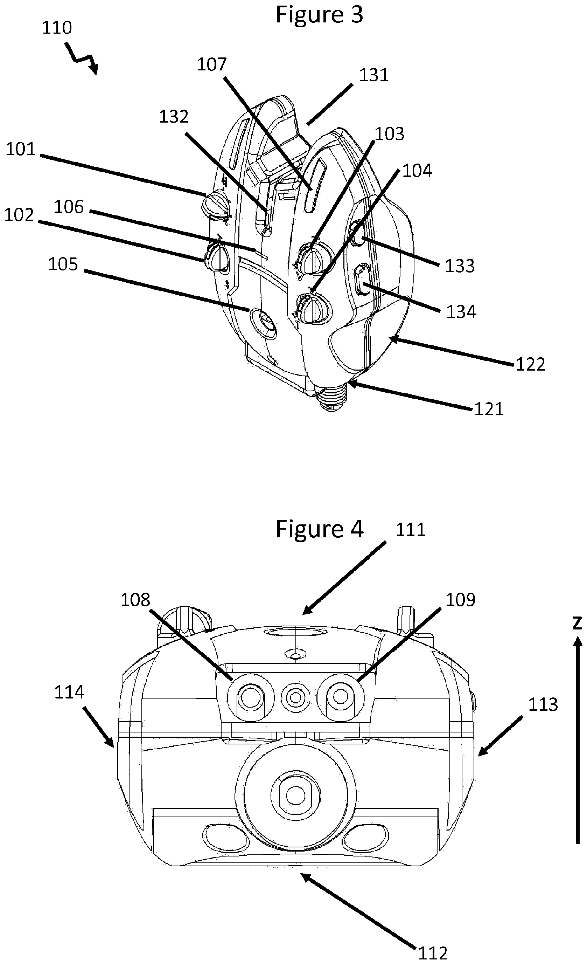

An exemplary bite detector 110 containing the sensing device will now be explained by reference to figures 1 to 9. A bite detector 110 is an electronic fishing appliance with a passageway 131 through a casing 120 that serves to let fishing line 50 run over a journaled roller wheel 40. The roller wheel 40 comprises four magnetic components, of which two 10, 10' are shown on figures 1 and 2. The magnetic components form magnetic couplings, indicated by a dashed arrows on figure 1, with a first 20 and second 30 sensor. The first 20 and second sensor 30 are two different types of motion sensor. The motion of the roller wheel 40 when the fishing line 50 moves is detected by either or both of the first 20 and second 30 sensors. If the signals from the first 20 and second 30 sensors exceed user set thresholds, the bite detector 110 is triggered and the user is alerted, normally by a sound from speaker 105 or a flashing light from LED 106. The bite detector 110 that is shown in figure 3 uses two motion sensors, one of which is a vibration sensor and the other is a roller wheel rotation sensor. The bite detector can be remotely controlled by a remote control that is wirelessly connected as described below. Since magnetic fields can permeate sealed volumes, the motion sensors and magnets are located in well-sealed volumes and are therefore protected from damage by exposure to liquids. Using magnetic coupling to the sensors also limits the maximum force that is applied to the sensors which helps prevent damage from violent line motions and the associated violent roller wheel motions.

An exemplary first sensor 20 comprises one or more magnetic sensors that sense the variation in the magnetic field when the magnets 10, 10' on the roller wheel move. The bite detector can switch between using the signals from the first 20 and second sensor 30. In some cases, the system can use a combination of the signals. When motion is detected, in some configurations, the bite detector will indicate via the sensor detecting the motion and it may indicate the magnitude and/or direction of the detected motion.

An exemplary second sensor 30 is explained further with reference to figure 2. The roller wheel 40 rotates around a central point 41. The second sensor 30 comprises a component 35, the first end 32 of the component 35 being magnetic and configured to magnetically couple to the magnets 10,10' on the roller wheel 40. The second end 33 of the component 35, which is located at the opposite end to the first end 32, is restrained in a housing 34. The centre of the component 35, which is located between the first end 32 and the second end 33, is mounted on a flexible mount 31. Between the housing 34 and the flexible mount 31 is a thin piezoelectric component. As the roller wheel 40 rotates, the magnets 10, 10' on the roller wheel exert a force on a first end 32. This force is transferred along the component 35 to the thin piezoelectric component. The force causes the piezoelectric component to bend and thereby generate a voltage which is sensed by measuring electronics. The motion of the roller wheel is therefore sensed by the piezoelectric component. The piezoelectric component will also bend in response to low-level vibrations that do not rotate the roller wheel. Such a sensing system offers lower quiescent current consumption than typical hall effect based systems and is less susceptible to mechanical shock than reed switches.

In some embodiments, an alternative third sensor may be used in addition to, or in place of either or both of, the first and second sensor. The third sensor uses optical monitoring to measure or detect motion of the moving guide or a component coupled to the moving guide. The optical monitoring may use optical sensors, such as a camera, to measure motion with its field of view. In some cases, markers, patterns, or textures may be used to improve the measured signal. A processor may be used to perform analysis of the measured optical signal to extract the motion signal. In some cases, optical components such as optical lenses or dispersive components, can be used to improve the performance of the sensor. The third sensor may also comprise illumination to further improve the performance of the sensor. The sensor and illumination may be configured to operate using visible or other ranges of optical wavelengths such as infrared. In other embodiments, other forms of motion sensing that monitors rotation of a rotating component without requiring physical contact may also be used.

A exemplary bite detector 110 will now be described by reference to figures 3 to 9, this bite detector 110 is an electronic fishing appliance 100 with a case 120 defined by two pieces, a front half 121 and a back half 122, that come together to form a roughly spheroidal shape, with flattened front and back faces, and a channel at the top providing the passageway 131 from the front to the back of the bite detector 110 for a fishing line. In some embodiments, the case 120 is formed of ABS plastic.

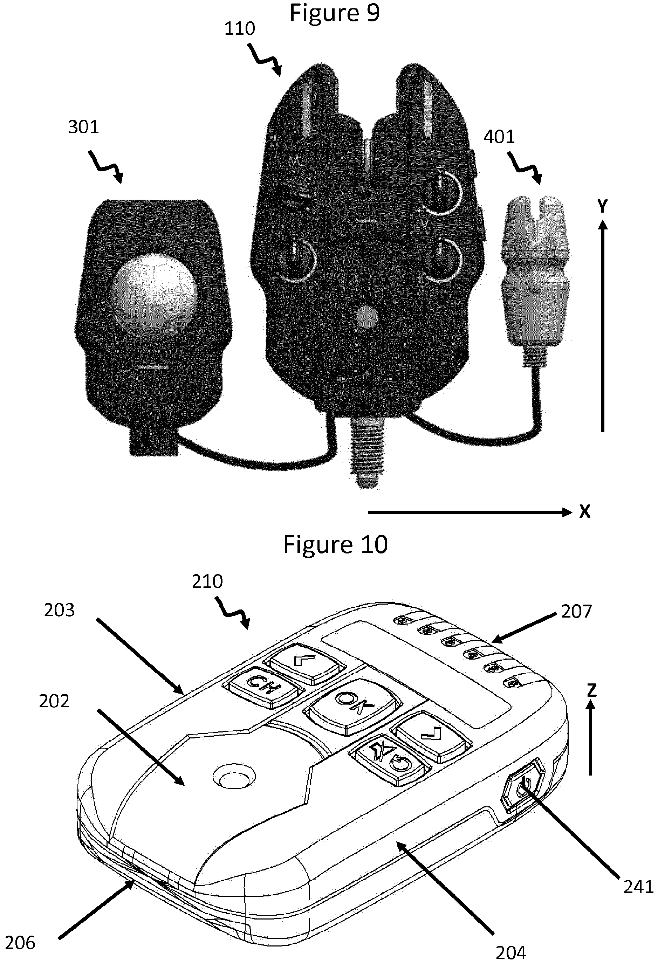

To describe the case of the bite detector, four faces are defined: a front face 111, a back face 112, a left face 113, and a right face 114. The bite detector will be described as if it is sitting vertically upstanding resting on its bottom most feature with the front face facing a user (as illustrated in figure 9). The left to right direction is indicated in figure 9 by the arrow marked X. The bottom to top direction is indicated in figure 9 by the arrow marked Y. The front to back direction is orthogonal to the X and Y directions and is indicated in figure 4 by the marrow marked Z.

Each face comprises a surface that has been filleted, curved, and/or shaped to improve its ergonomics, meaning a user can comfortably use it even with gloved hands. The surfaces are generally not distinct but instead transition smoothly between adjacent faces.

The front face 111 which is formed on the front half 121 has four cavities each of which receives a knob. The four knobs are the mode knob 101, sensitivity knob 102, volume knob 103, and tone knob 104. The knobs are arranged in a two by two formation with the mode knob 101 and sensitivity knob 102 located on the left side of the bite detector 110, and the volume knob 103 and tone knob 104 on the right hand side of the bite detector 110. The knobs are sufficiently offset from the centre line to avoid interference with any fishing line passing through the passageway 131. The mode knob 101 and volume knob 103 are located above and in line with the sensitivity knob 102 and tone knob 104 respectively.

The back face 112 comprises a light sensor to enable the bite detector to monitor an ambient light level. If so configured, the bite detector will adapt the illumination of the display and/or other illuminated features taking the ambient light level in to account.

The knobs are shaped to enable easy manipulation. The particular shape is approximately half a dome with two parallel offset cuts to form a central curved ridge that can be easily grasped between two fingers, and to provide easy visibility of the control. The knob can be made of any suitable material such as plastic.

All knobs can be rotated to change operational parameters of the bite detector 110. The mode knob is biased so that it snaps to one of several positions. The other three knobs can be rotated to any position within predefined limits of rotation. The front half of the case 121 and the individual knobs are marked with white paint to assist the user in rotating the knobs to the appropriate position.

In the standard menu mode, the mode knob 101 has several settings including vibration and eight lengths ranging from 2 to 100 mm. When the bite detector is controlled by a remote control (see below) 24 levels rather than 8 are available. In some configurations, the lengths may include values over 100 mm. The lengths relate to the roller wheel sensitivity, in other words the distance the roller wheel must rotate in a set time to trigger a bite event. This is how the roller wheel sensitivity is set manually on the bite detector.

In the standard menu mode, the sensitivity knob 102 adjusts the vibration sensitivity.

In the standard menu mode, the volume knob 103 adjusts the volume of the bite detector from silent (0 db) to approximately 100 db.

In the standard menu mode, the tone knob 104 adjusts the emitted tone from high to low.

At the top of the front face 111 there is two translucent strips 107 that are each configured to be illuminated by illumination means located inside the case. The illumination means is configurable to adapt the state of the emitted light as required. Each of the translucent strips 107 can be selectively illuminated in particular lighting colours and therefore any desired lighting pattern can be selected.

In the left right centre of the front face, approximately a third of the height of the bite detector is a speaker 105 for alerting the user. The speaker 105 can produce whatever sounds are required according to the operation mode, detected event, or operational parameter of the bite detector.

In the left right centre of the front face, above the speaker 105 is a central LED 106, which is also called the night light. The LED 106 can change the state of emitted light according to the operation mode, detected event, or operational parameter of the bite detector 110. The central LED 106 is also called a night light. Depending on the configuration of the bite detector, the central LED 106 and translucent strips may be configured to have the same state of emitted light when active, or they may be configured to have different states of emitted light when active.

The passage way 131 comprises a wide groove and at the base of the wide groove a narrow groove 132 containing the roller wheel.

On the right face 113 of the bite detector 110 are two buttons, which are the mode button 133 and the mute button 134. Each of the two buttons are received in cavities in the front half 121 of the case. The buttons are formed out of any suitable material such as plastic or rubber. The button are formed as rounded rectangles shapes, with the long axis of each being aligned. The depth of each button, in other word the short axis of the rectangle shapes, are the same. The mode button is situated above the mute button. The mode button 133 is approximately 75% the size of the mute button. The mode button 133 is situated at a height just above the height of the volume knob 103. The mute button 134 is situated at a height in-between the height of the volume knob 103 and the tone knob 104.

A long press on the mode button 133 followed by moving the mode knob 101 into one of several predetermined positions moves into specific menu modes, such as bite LED colour selection mode or night light LED colour selection. In the specific menu modes, the tone button 134 can be used to change operational parameters, and pressing the mode button again 133 exits the specific menu mode.

Similarly, a long press on the mode button 133 followed by moving the mode knob 101 into one of several different predetermined positions configures the bite detector 110 to a specific status indicating mode that indicates a status of the bite detector. Again, pressing the mode button 133 again exits this specific status indicating mode. As example, entering a battery level mode means the LED colour of the bite detector reflects the battery status.

On the bottom of the bite detector there are two ports, which are the universal port 108 and the wired accessory port 109. The universal port 108 is known as the IQ Port 108. The ports are located in an extended edge of the front half of the case and are received in two cavities. The universal port 108 provides a socket for a 3.5 mm jack plug with 4 contacts providing 2 communication channels.

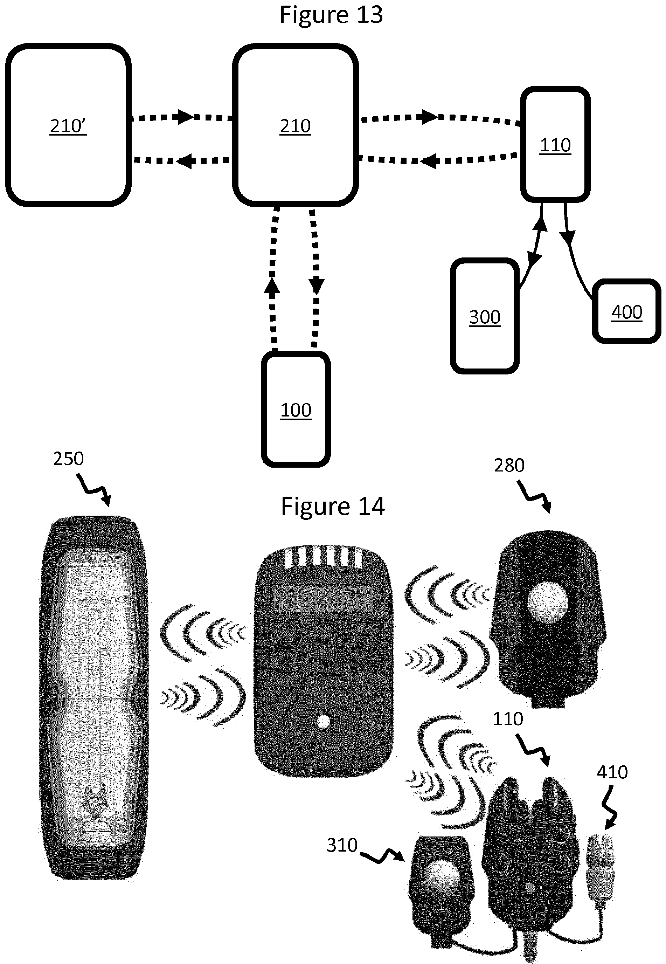

The wired accessory port 109 is a 2.5 mm socket suitable for powering an illuminated ancillary fishing accessory 400, such as the multicolour fishing hanger 410 as seen in figure 14. The wired accessory port 109 is configured to be backwardly compatible with standard ancillary fishing accessory 400. Some multicolour fishing hangers 410 that are connected to the wired accessory port 109 are configured to adapt the state of emitted light according to the operational parameters of the bite detector 110. The bite detector is configured to attempt to identify ancillary fishing accessories 400 that are connected to the wired accessory port 109. Therefore, multicolour fishing hangers 410 that are connected will be recognised as such and appropriately powered. Similarly, connected standard fishing hangers will be recognised as such and appropriately powered. Such multicolour hangers 410 can therefore serve to act as a secondary notification system by variation of the state of their emitted light. The bite detector 110 is configured to be connected to a remote control 210 that forms a wireless network by a wireless connection. In this case, when multicolour hangers 410 are connected to the wired accessory point 109 the multicolour hangers 410 may reflect an operational parameter or status of any electronic fishing appliance 100 that is in communication with the remote control 200.

The universal port 108 therefore serves as a connection to enable electronic fishing appliances 100 without wireless networking ability, or with damaged networking ability, to connect to the network provided by the remote control 200. The universal port 108 can send control signals to connected electronic fishing appliances and receive data from connected electronic fishing appliances if the connected electronic fishing appliances have such functionality. The universal port 108 assesses the electrical properties of connected electronic fishing appliances, such as the resistance between connections, to ascertain the type of electronic fishing appliances that is connected. A database of known electronic fishing appliances is then searched to find the operational parameters appropriate for an electronic fishing appliance of the ascertained type. The universal port 108 is then configured to ensure that the appropriate voltages and/or currents are supplied or monitored so as not to damage the connected electronic fishing appliance and ensure it is appropriately monitored to avoid loss of data. The universal port 108 is protected against incorrect insertion and short circuit.

The bite detector 110 therefore automatically interfaces with connected ancillary fishing accessories. The user does not therefore have to adapt the bite detector 110, such as by installing drivers or performing a configuration process when an ancillary fishing accessory is connected to the universal port 108. Appropriate operational parameters stored on the bite detector 110 or transmitted from a connected remote control 210 will be automatically transferred to the connected electronic fishing appliance once said electronic fishing appliance is connected to the universal port 108.

The bite detector case 120 is formed by joining two halves 121 and 122, which are differently shaped. The two halves of the case comprise molded cells which cooperate to prevent ingress of water or detritus into the body. The cells also increase structural rigidity and make the bite detector 110 more buoyant.

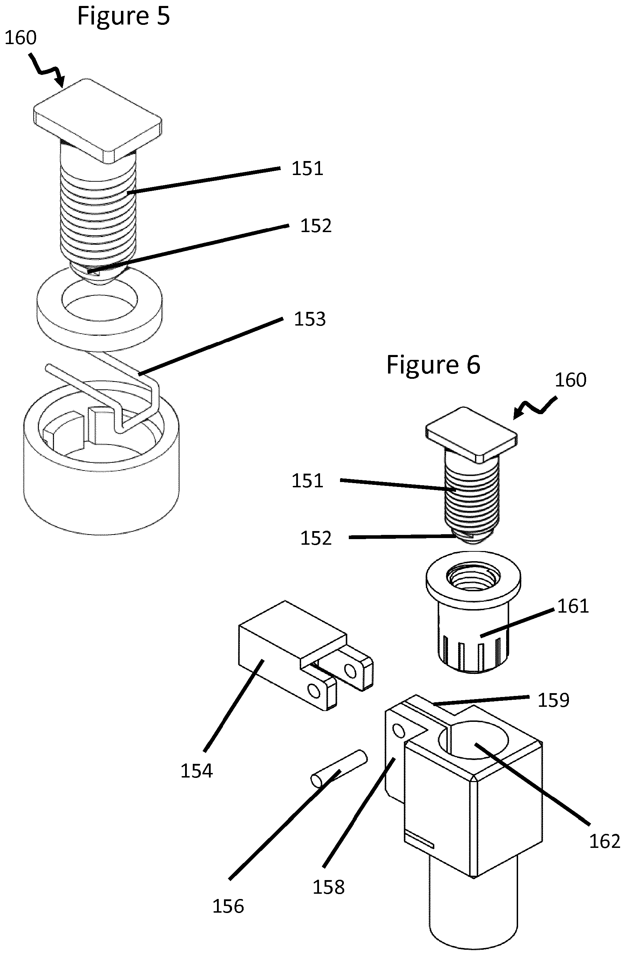

Protruding from the bottom of the bite detector is a quick release spigot 160, as shown in figure 5, for coupling to a complimentary quick release bank stick. The spigot is also suitable for coupling to a standard bank stick by a standard screw fitting. The quick release spigot is defined by a threaded cylinder 151. The threaded cylinder 151 is received in a cavity in the back half 122 of the case. The end of the threaded cylinder 151 furthest from the case has a reduced diameter section with a lip 152 that provides the quick release functionality. The lip 152 is configured to be engaged by two resilient substantially parallel bars 153 on the quick release bank stick. Since the threading on the cylinder has a wider diameter and extends radially beyond the reduced diameter section, when used with a standard screw fitting bank stick, the quick release feature does not interfere with the standard operation of the spigot. The lip 152 only partially surrounds the spigot. Therefore, the quick release spigot 160 can be rotated to an orientation in which the lip 152 is not engaged by the resilient substantially parallel bars 153, which allows the quick release spigot to be easily removed. To insert the bite detector, the quick release spigot 160 can be inserted in the rotation orientation at which the resilient substantially parallel bars 153 are not engaged and then rotated into the engaged position to lock it.

In other embodiments, the quick release spigot 160 may attach via a different mechanism, which is shown in figures 5 to 8. In this case, the quick release spigot 160 is received into an adaptor 155. The adapter is a cylindrical sleeve with an internal thread that is complimentary to the threaded cylinder 151 of the quick release spigot. The adaptor has an external cylindrical surface 161 which is received in a cylindrical channel 162 in a clamping collar 157. The cylindrical surface 161 has longitudinal slots to help prevent damage to the adaptor when the adapter 155 is compressed by the clamping collar 157 and to help prevent the adaptor 155 rotating when it is clamped by the clamping collar 157. The adaptor 155 also has a top lip for engagement with a top surface of the clamping collar which prevents the adaptor 155 falling through or going entirely within the clamping collar 157. The cylindrical channel 162 of the clamping collar 157 is deformable by moving two walls 158,159 towards each other. The two wall have a common through aperture that receives a pin 156. The pin 156 pivotably couples a lock lever 154 to the clamping collar 157. When the lock level 154 is in a first, horizontal, position the adaptor 155 can rotate, move in, or move out of the cylindrical channel 162. When the lock lever 154 is in a second, vertical, position the clamp collar 157 will fix any inserted adaptor 154 in a position and prevent insertion of an adaptor 154 if one is not inserted.

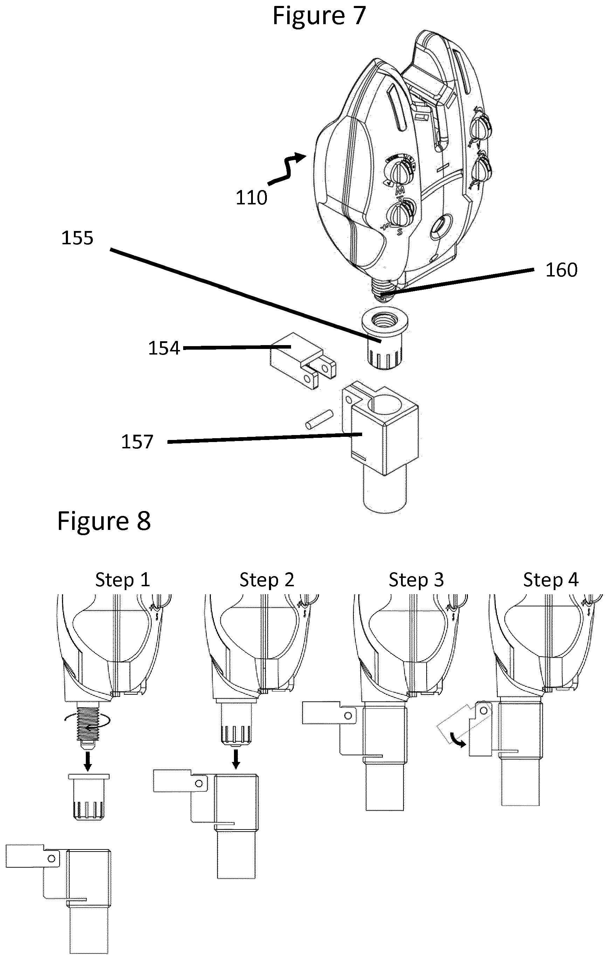

To use this quick release mechanism, which is also a quick lock mechanism, a user screws the adaptor 155 on to the spigot 160. The spigot 160 is then inserted into the clamping collar 157 with the lock lever 154 in a horizontal position. Finally lock lever 154 is moved into the vertical position to lock the adaptor 155. This process is shown in figure 8. The reverse process unlocks the bite detector.

In some embodiments, the bite detector will have differing shapes to improve aesthetics. However, overall the form will remain similar to the form illustrated in figure 3.

Similarly, some embodiments accommodate additional buttons. The additional buttons include, in some embodiments, quick access buttons to facilitate the rapid configuration of key user functions.

### Operation

The bite detector 110 has a first 20 and a second sensor 30. The first sensor 20 being similar to the above described exemplary first sensor and the second sensor 30 being similar to the above described exemplary second sensor. In use, the bite detector 110 will be coupled to a support and the fishing line 50 passed through the passage way 131 over the moving guide 40. The sensitivity, volume, tone and mode will then configured either by the manual knobs or by a remote control 210 (as described below). Dependent on the mode the LED 106 may emit a selected state of light.

When the fishing line 50 is moved the moving guide 40 will also move, which moves the magnetic elements. The magnetic coupling between the magnetic elements and the first 20 and second 30 sensor will therefore change. This change will make the sensors produce electrical signals which are then analysed.

Dependent on the mode, if either, both or a combination of the signals exceed a selected threshold the bite detector 110 will register a detected bite. The detected bite will be signalled to a user by the speaker 105 or the LED 106 dependent on the selected notification method. The user may then silence the alarm and proceed to deal with the fish bite.

Should the angler decide to leave the bite detector or surrounding area he may put the bite detector into an alarm mode. In this mode, if an authorized event is detected, such as motion of the bite detector, the bite detector will enter an alarm mode to alert the user.

When a remote control 210 is used with the bite detector 110 the operational parameters may be set either by the remote control 210 or on the bite detector 110. Similarly, detected events may be notified to the user by either of, or both of, the bite detector 110 and the remote control 210.

### Remote control

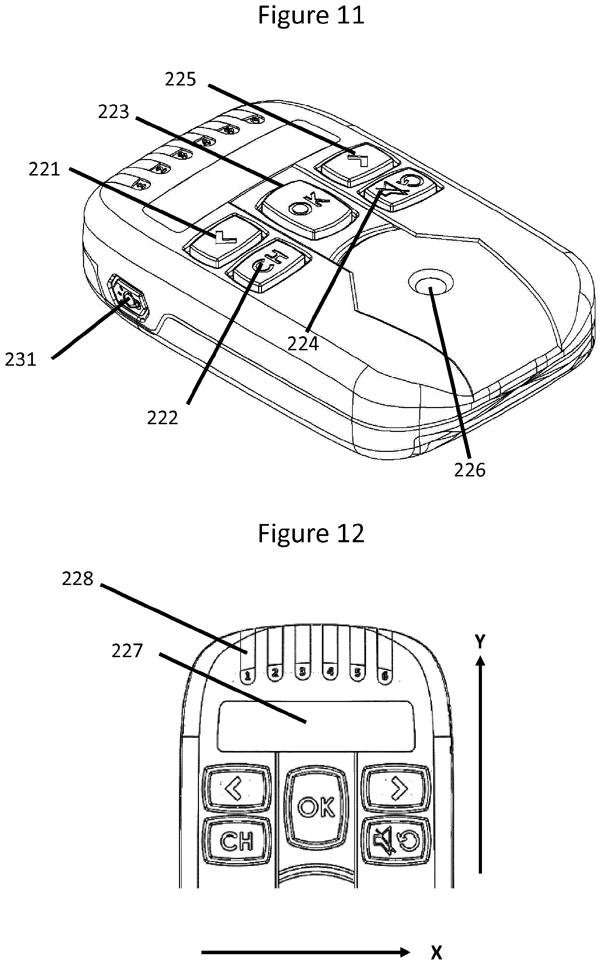

A remote control 210 for remotely controlling the bite detector 110 will now be described by reference to figures 10 to 14. The term remote control is defined to mean control via a wireless connection. The remote control 210 is a portable battery-powered device with a case that is formed to be conveniently held in an angler's hand. The remote control 210 bilaterally communicates with connected bite detectors 110 and connected electronic fishing appliances 100. The remote control 210 case can be defined by six faces, which are the front face 202, back face 205, left face 203, right face 204, top face 207 and bottom face 206. The case will be described as if it is sitting vertically upstanding resting on its bottom face 206 facing a user (as illustrated in figure 14). The left to right direction is indicated in figure 12 by the arrow marked X. The bottom to top direction is indicated in figure 12 by the arrow marked Y. The front to back direction is orthogonal to the X and Y directions and is indicated in figure 10 by the marrow marked Z.

The width of an object is defined as its length in the X direction, the height of an objection is defined as its location in the Y direction, and the depth of an object as its length in the Z direction.

Each face comprises a surface that has been filleted, curved, and/or shaped to improve its ergonomics, and make it easier for a user to hold and use the remote control for long periods of time. The surfaces are generally not distinct but instead transition smoothly between adjacent faces. The front face has five buttons, which are the menu left button 221, the menu right button 225, the ok button 223, the channel selection button 222, and the return button 224.

The remote control 210 is substantially symmetric in the left to right direction about the centre plane with the ok button 223 located just above the centre of the front face 202. To the left of the ok button 223 are the menu left button 221 and the channel selection button 222, the channel selection button 222 being located below the menu left button 221. To the right of the ok button 223 are the menu right button 225 and the return button 224. The return selection button 224 is located below the menu right button 225. The top of the left menu button 221 and right menu button 225 align with the top of the ok button 223.

The left menu button 221, right menu button 225, channel selection button 222 and return button 224 are approximately the same size. The ok button 223 is approximately 75% of the width and approximately 200% of the length of the left menu button 221.

The configuration of the buttons has been designed to enable easy and intuitive use even in low light conditions on when being used with gloves. All buttons on the front face 202 are received in their own separate cavity in the front face 202 and all are profiled as bulging rounded rectangles to produce an ergonomic shape. They are made from any suitable hard wearing material that is convenient to use as a button such a plastic or rubber. The buttons are marked with symbols to let the user know the function of the relevant button.

In the left right centre, approximately a third of the height from the bottom face 206 to the top face 207 is a speaker 226 for alerting the user. The sound the speaker produces adjusts according to the operational parameters or status of the remote control 210, or the operational parameters or status of connected the bite detector 110 or connected electronic fishing appliances 100, depending on the current mode of the remote control 210.

Running substantially all of the width of the front face 202 except for a narrow bevel on the left edge and similarly sized narrow bevel of the right edge is an alpha numeric display 227 displaying two lines of characters. This displays selected operational parameters and statuses of the remote control 210, connected bite detectors 110 and connected electronic fishing appliances 100. The display 227 is located so that the bottom edge is above the top of the menu left button 221, ok button 223, and menu right button 225.

Along the top of the front face 202, running over the top face 207 and extending down the back face 205 of the remote control 210 are a series of six partially translucent strips 228 that are each configured to be illuminated by illumination means situated inside the case. Each of the six strips 228 is individually addressable and any desired lighting pattern can therefore be created. At the end of the strips on the front face is a number. The numbers are arranged consecutively and run from 1 at the base of the left most strip to 6 at the base of the right most strip. As described below, the remote control 210 is configured to communicate over multiple channels. The strip lights 228 are therefore normally used to indicate the relevant channel over which a certain communication is happening and may emit a range of colours. If the function is active, the illumination of the strip lights 228 and all light emitting areas of the remote control 210 can be configured to automatically adjust according to the local environment or current time. When multiple devices are connected and an event is detected at a particular device indications on the strip lights 228 and/or display 227 will serve to alert the user and direct them to the appropriate device.

The indication may include matching the light emitting colour of the device detecting the event. The strip light 228 and/or display 227 are also used to display operational parameters and options that are available for the bite detector that is connected, since these may vary depending on the configuration of the bite detector. Remote control of the bite detector enables additional configurations to be accessed and finer control of the bite detector over that which is available by manual configuration of the bite detector.

On the right side of the remote control 210 is a hexagonally shaped power button 241. On the right side of the remote control 210 is a hexagonally shaped torch button 231.

The function of the various buttons of the remote control 210 varies according to the operational mode however generally the following may be said.

The power button 241 turn has the function of turning the remote control 210 on and off. To avoid accidental use, the power button 241 does not activate when the remote control 210 is in a menu mode.

The menu left button 221 scrolls left through any menu when such scrolling is possible. A single press will also show the last channel that has been activated. Similarly, the menu right button 225 scrolls right through any menu when such scrolling is possible.

The channel select button 222 is commonly used for at least two functions. A quick press changes the active communication channel. A long press ensures the remote control 210 enters a channel mode. The channel mode will be the main mode used to configure connected bite detectors 110.

The return button 224 is commonly used for at least two functions. Firstly, it will mute alarms on the remote control 210 and any connected accessories, such as bite detectors 110, that are configured to be mutable by the remote control 210. When in a menu mode the return button 224 acts as a menu exit.

The torch button 231 is used for temporarily activating a torch mode in which the strip lights are all active at high power to form a torch.

A long press on the ok button 223 enters a hub mode. This menu can then be navigated through using the ok button 223 to select, the return button 224 to go back, the left menu button 221 to scroll the menu to the left and, and the right menu button 225 to scroll the menu to the right. The display 227 ensures the user knows which menu options are available.

Various options are available and various operating parameters can be set, and status interrogated, via the menus on the display.

Various status messages can be displayed on the display 227 such as battery status, temperature, local time, trip time, and the number, type, and status of connected electronic fishing appliances, which may of course include other remote controls of similar or different design.

When a communication channel has been selected on the remote control 210, various channel specific settings can be specified. Setting specific operational parameters for specific channels will allow the user to configure connected bite detectors 110 connected on the specified channel, the operational parameters that can be configured include:
Bite LED Colour (Options: Red, Green, Blue, Cyan, Yellow, Magenta, White, Off);
Night LED Colour (Options: Red, Green, Blue, Cyan, Yellow, Magenta, White, Off);
Tone Setting (Adjustable Range 200Hz tp to 3135Hz);
Volume Setting (0% - 100% in 5% increments);
Roller wheel Sensitivity (Adjustable Range - Roller 1 - Roller 8), adjusting this parameter by remote control enables selecting a sensitivity from 24 levels;
Battery Level (%Value);
Bivvy Light Armed (On / Off);
Radio Signal (%Value);
Night lighte Mode (Mode 1, 2, 3 & 4)
Auto Night Light Level, Swinger off until bite.
Manual Night Light level, Swinger off until bite.
Auto night light level, Swinger follows night light level & colour until bite, then matches Bite LED on bite.
Manual Night Light level, Swinger follows night light level & colour until and colour bite, then matches Bite LED on bite.

Naturally, the above is only a possible configuration of control settings. The remote control 210 can be reprogrammed with alternative menu layout and options and users will be able to configure and customize the remote control 210 and menu options as they see fit. This may involve setting up custom modes that enables many parameters on multiple bite detectors 110 to be configured by simply selecting the custom mode. The user interface of the remote control can therefore be configured as desired.

In some versions, the remote control will be supplied in differing forms to improve aesthetics. However, overall the form will remain similar to the form illustrated in figure 10.

Similarly, some versions of the remote control 210 accommodate additional buttons and/or allow the remote control to stand upright. The additional buttons include, in some embodiments, quick access buttons to facilitate the rapid configuration of key user functions.

### Remote operation

In use, the remote control 210 provides a central hub that establishes a wireless connection using a wireless transceiver to enable bi-directional communication with at least one electronic fishing appliance 100 including a bite detector 110. As an example see figure 13, in which wireless communication is indicated by dotted lines, solid lines are used to indicate physical connections, and arrows are used to indicate the flow of information. See also figure 14, in which wireless communication is indicated by radiating wave icons.

The remote control 210 can also harmonize an operational parameter of bite detectors 110 and connected electronic fishing appliances 100 that have a relevant adjustable operational parameter. This enables various modes to be formed such as a security mode in which the remote control 210 and any connected electronic fishing appliance 100 form a security system for detecting at least one unauthorized event. If an unauthorized event occurs, such as motion around an area or of a bite detector 110, the remote control 210 can put all or a select number of connected electronic fishing appliances 100 in to an alarm mode. This is useful to protect bite detector that are located far from the user.

The remote control 210 and bite detector 110 can also be configured to prevent exit from an alarm mode unless an appropriate code is entered. The bite detector 110 or remote control 210 can also serve to silence all alarming electronic fishing appliances or reduce the alarm volume, be they alarming due to alarm mode or otherwise.

Bite detectors 110 have many operational parameters, such as:
state of emitted light (colour, flashing frequency, and brightness);
intensity of notification; notification method by which a bite is signalled (vibrating, making a sound, emitting a light, and changing the state of emitted light);
sensitivity;
operational mode; and
any other parameter that is adjustable by a user of the bite detector.

These operational parameters can all be configured quickly and easily via the remote control 210.

The remote control 210 enables remote control of electronic fishing appliances 100, such as bite detectors 110, by transmitting via the wireless transceiver one or more control signals to electronic fishing appliance 100 in wireless communication with the remote control 210. The buttons of the remote control 210 form a user interface to enable the desired control signals to be selected and sent.

The display 227 of the remote control 210, the six multicolour strip lights 228, and the speaker 226 form a versatile notification element. The notification element being adapted to receive via the wireless transceiver a status signal from at least one electronic fishing appliance 100 in wireless communication with the remote control 210. The status signal being indicative of an operating status of the electronic fishing appliance 100, and the notification element being further adapted to alert a user of the status. One exemplary status would indicate a bite detected on a bite detector. Of course, the status signal may also be merely indicative of a remote control 210, connected bite detector 110 or other electronic fishing appliance 100 operation parameter. When multiple electronic fishing appliances are connected the status signal will includes an indication as to which electronic fishing appliances the status came from. For example, in one configuration, a bite detected on a bite detector 110 coupled to communication channel 2 will make the 2nd strip light flash or illuminate for a pre-set time in the same colour as the bite detector and at the same time the display 227 will indicate the type and direction of the bite.

Many electronic fishing appliances can be controlled through the remote control 210 including:
bite detectors 110;
PIR detectors 280;
light, such as a bivvy light 250;
a battery pack;
a float, such as an illuminated float;
a weighing scale; and
any electronic fishing appliance configured to communicate with the remote control 210.

The remote control 210 can also be configured to communicate with other remote controls 210' of similar of different design. The other remote control 210' may then enable the relaying of communications and thereby increase the range of the wireless communication network that is formed. Similarly, bite detectors 110 may relay communication and thereby increase the range of the wireless communication network that is formed. Such relaying enables multiple bite detectors 110 that are separated large distances, which exceed the range of a single remote control, to be controlled by a single remote control.

### Network

The bite detector 110 may join or leave a wireless remote control network by one of several network establishing and maintenance protocols. The remote control 210 which provides the network is normally configured to automatically form the network by linking with electronic fishing appliances as they appear within a range of the remote control 210. However, as with other electronic devices 100, the bite detectors 110 generally have to undergo a pairing procedure beforehand to ensure that only desired bite detectors 110 enter into communications with the remote control 210. To improve the security of the network and minimize cross talk communications between the paired bite detectors 110 and any other paired electronic fishing appliances and the remote control 210 are encrypted.

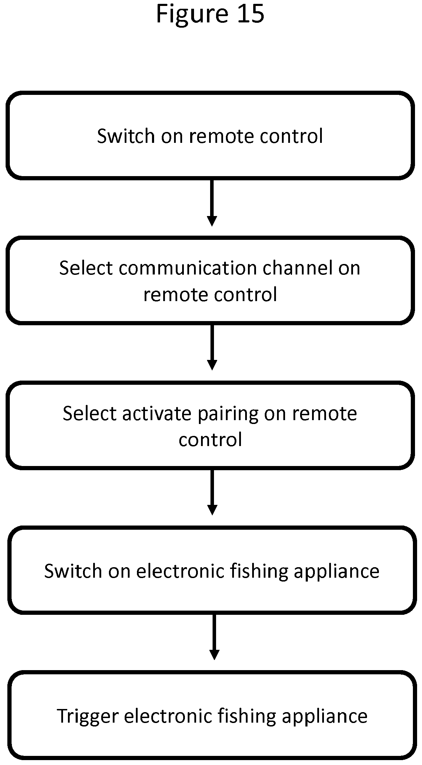

As shown on figure 15, the pairing process to pair an electronic fishing appliance 100 to a remote control 210 comprises the following steps: bringing the electronic fishing appliance 100into the range of the wireless communication of the remote control 210; switching on the remote control 210; entering the channel menu on the remote control 210 and selecting a communication channel to pair; selecting activate pairing on the remote control 210; switching on the electronic fishing appliance 100; and triggering or activating the electronic fishing appliance 100. The electronic fishing appliance 100 and the remote control 210 are then paired. As an example of triggering, triggering a bite detector 110 comprises pressing the mode button on the bite detector 110 or triggering either of the motion sensors.

As shown on figures 13 and 14, the remote control 210 is configured to communicate with an ancillary fishing accessory 300 that is coupled to a bite detector 110, through a port 108. The ancillary fishing accessory 300 is then effectively treated the same as a separate electronic fishing appliance 200 that is wirelessly controlled by the remote control 210.

The remote control 210 is configured to control the ancillary fishing accessory 300 via the port 108 on the bite detector 110, and to acquire data from the ancillary fishing accessory 300 via the port 108. The port 108 is a physical connection comprising four electrical connectors and has the form of a 3.5 mm jack. The port is configured to recognize the ancillary fishing accessory 300 that is connected. The coupled ancillary fishing accessory 300 can then be control in a similar manner to electronic fishing appliances 200 that are directly wirelessly connected to the remote control 210.

The port 108 of the bite detector 110 therefore enables ancillary fishing accessories without wireless connection abilities to join the wireless network that is provided by the remote control 210.

### PIR sensors

PIR sensors, for use with the bite detector 110, will be described by reference to figure 14 in which it can be seen that PIR sensors 280,310 have a front surface with a hemispherical window, formed as half a geodesic dome, which is partially transparent to infra-red signals. An electronic PIR sensor is located behind the geodesic dome. The electronic PIR sensor detects motion in the manner that is known to those skilled in the arts. The detected signals are then processed and communicated back to a receiving device.

As seen in figure 14, there are two forms of PIR sensor. A first form of PIR sensor is a wireless PIR sensor 280 configured to directly wirelessly to the remote detector 210. The wireless PIR sensor 280, bite detector 110 and remote control 210 can be used to form a security system. The PIR motion sensing enhances the motion detection capabilities of the bite detector 110 and therefore makes the security system more effective.

A second form of PIR sensor is the wired PIR sensor 310. The wired PIR sensor 310 is not in direct wireless communication with the remote control 210. It is instead physically coupled to the bite detector 110 through the universal port 108 on the bite detector 210. Therefore, the wired PIR sensor 310 operational parameters will be controllable by, or via, the bite detector 110, and status events from the PIR sensor 310 can be transmitted through the bite detector 110. Therefore, due to the universal port 108, for most applications, the wired PIR sensor 310 can be considered to be connected to the network equivalently to the wireless PIR sensor 280. The remote control 210 is not required to operate the wired PIR 310, or any other device connected through the universal port 108. However, the remote control 210 may enable configuration of more operation parameters than are accessible by the bite detector alone 110.

The PIR sensors 310,280, are particularly useful when it comes to forming a security system as they are very effective at detecting unauthorized presence. Both sensors have a multicolour LED. If connected, the state, such as colour, of the LED is adjustable by the bite detector 110, or by the remote control 210 via the bite detector 110.

### Bivvy light

A bivvy light, for use with the bite detector 110, and which can be controlled by the remote control 210 will now be described by reference to figure 14. A bivvy light is a light for illuminating a bivvy, which is a small tent. The bivvy light 250 as shown in figure 14 can communicate with the remote control 210, which can serve to turn the bivvy light 250 on or off, or adjust the state of the light that is emitted. One or more status events from the bite detector 110 can be indicated using one or more states of the light that is emitted by the bivvy light 250. For example, a bivvy light may illuminate and the colour of the bite indicator or triggered device be displayed on LEDs on either side of a main illumination area to indicate a bite on a particular bite detector 110.

In some embodiments, the bivvy light is fitted with a PIR sensor. This lets the bivvy light form an effective security system for protecting an unattended bivvy. The bivvy light based security system can also be in communication with the remote control and devices on the network provided by the remote control.

### Adaptable multicolour fishing hanger

A fishing hanger that can connect to the bite detector 110 via the wired accessory port 109 will now be described by reference to figure 14. The fishing hanger 410 is a multicolour fishing hanger. The fishing hanger 410 has a cylindrically symmetric body with a passageway at a first end.

The passageway runs orthogonally to the axis of cylindrical symmetry of the body. The passageway comprises a main groove with a narrow groove extending from the base of the main groove. The fishing hanger is designed to couple to a fishing line, and one such way of coupling is by pressing a fishing line into the narrow groove. Once pressed in place, the hanger is frictionally retained on the fishing line.

The body is partially translucent and can be illuminated by a light emitting element located within the body. The light emitting element is a multiple colour LED, which is formed by a combination of LEDs of different colours. The state of the emitted light and whether or not the light is activated is controlled by electrical signals transmitted from a cable that enters the body at the second end, which is the end at the opposite end to the passage way.

Variation of the state of the light that can be effected from the bite detector 101, or the remote control 210 via the bite detector, include changes in the colour of the emitted light; the intensity of the emitted light; the flashing frequency of the emitted light; the duty cycle of the emitted light; the modulation of the emitted light; and combinations thereof.

The body is formed and treated so that it an image is visible and the remaining light is diffused throughout the body. A narrow waist is also formed approximately equidistant from the first and second ends.

When the fishing hanger 410 is connected to the bite detector 110, the bite detector 110 controls the state of the emitted light and whether or not the light is activated. When the bite detector 210 is coupled to a remote control 210, a user can control the hanger 410 from either the bite detector 110 or the remote control 210.

Controlling the fishing hanger 410 includes configuring the state of the emitted light and whether or not the light is activated. The bite detector 110 or remote control 210 may also be configured to change the state of the light emitted in response to a stimulus such as status signals from a bite detector, which may or may not be the coupled bite detector 110.

For example, the remote control 210 might configure a bite detector 110 to turn blue. A fishing hanger 410 connected to a blue light emitting bite detector 110 will go blue to harmonize with the blue bite detector 110. The remote control 210 can then configure the fishing hanger 410 to turn red when a bite is detected on the bite detector 110.

The bite detector 110 and fishing hanger 410 can also be set into a security mode. In this mode, the lights will flash and bite detector alarm if an unauthorized event is detected. An unauthorized event includes uncoupling or moving of all electronic components forming the security system.

The fishing hanger 410 can be configured via the bite detector 110 or remote control 210 to set four night modes, which are:
1- fishing hanger illumination off until a bite is detected at which point the hanger illuminates at a automatically determined level.
2- fishing hanger illumination off until a bite is detected at which point the hanger illuminates at a manually set level.
3- fishing hanger illumination is set to automatically follows bite detector night light level & colour until a bite is detected at which point it matches bite notification parameters (level & colour) of the bite detector.
4- fishing hanger illumination is set at a manually set levels until a bite is detected at which point it matches bite notification parameters (level & colour) of the bite detector.

The wired accessory port 109 is a 2.5 mm jack connection. Therefore, existing single colour fishing hangers can be powered by the bite detector 110 wired accessory port 109. In this case, the colour of the single colour fishing hanger is not adjustable.

The body of the fishing hanger 410 also has a screw thread to enable additional weights to be added.

The features disclosed in relation to particular aspects are not limited as such and further embodiments may therefore be formed from a combination of any of the disclosed features.

When used with a remote control 210, the bite detector 110 is part of a network and may therefore operate using the combined abilities and signals of all or a subset of appliances on the network. The universal port 109 also enables easy extension of the capabilities of the bite detector 110. Therefore, additional devices added to the bite detector 110 or network may add new functionality to the bite detector.

## Claims

1. A sensing device for detecting motion of a fishing line for a bite detector (110), the sensing device comprising:
a first sensor (20);
a housing (120) surrounding the first sensor; and
a moving guide (40) adapted to contact a fishing line (50),
wherein the first sensor is magnetically coupled to, or configured to optically monitor, the moving guide, and the first sensor is configured to detect motion of the moving guide, wherein the sensing device further comprises a second sensor (30), and wherein the second sensor comprises a piezoelectric vibration sensor (35);
**characterized in that**:
the second sensor is magnetically coupled to the moving guide.

2. The sensing device of the preceding claim, wherein the moving guide comprises a rolling guide (40).

3. The sensing device of any preceding claim, wherein the moving guide comprises at least one magnet (10).

4. The sensing device of claim 3, wherein the at least one magnet comprises 4 magnets (10, 10').

5. The sensing device of any preceding claim wherein the sensitivity of the sensing device can be adjusted by combining or interpolating signals, or switching between signals from, the first and second sensor.

6. The sensing device of any preceding claim wherein the second sensor is sealed from the outer environment.

7. The sensing device of any preceding claim, wherein the first sensor is sealed from the outer environment.

8. The sensing device of any preceding claim, wherein the sensing device is configured such that a signal produced by the sensing device is representative of the motion of a fishing line, wherein the signal is an analogue electrical signal.

9. A bite detector (110) comprising the sensing device of any preceding claim.

10. The bite detector of claim 9, wherein the bite detector comprises a quick-release spigot (160) for coupling to a first bank stick, wherein the bite detector is configured for screw coupling to a second bank stick in place of the first bank stick.

11. The bite detector of any of claim 9 or 10, wherein the bite detector is configured to be at least one of sealed, buoyant, and self-uprighting when floating in water.

12. The bite detector of any of claims 9 to 11, wherein the bite detector comprises a body comprising molded cells, wherein the molded cells define nested compartments.

## Patentansprüche

1. Abtastvorrichtung zum Erkennen einer Bewegung einer Angelleine für einen Bissdetektor (110), wobei die Abtastvorrichtung Folgendes umfasst:
einen ersten Sensor (20),
ein Gehäuse (120), das den ersten Sensor umgibt, und
eine Bewegungsführung (40), die dafür eingerichtet ist, in Kontakt mit einer Angelleine (50) zu stehen,
wobei der erste Sensor magnetisch mit der Bewegungsführung gekoppelt oder dafür konfiguriert ist, selbige optisch zu überwachen, und der erste Sensor dafür gestaltet ist, eine Bewegung der Bewegungsführung zu erkennen, wobei die Abtastvorrichtung ferner einen zweiten Sensor (30) umfasst und wobei der zweite Sensor einen piezoelektrischen Vibrationssensor (35) umfasst,
**dadurch gekennzeichnet, dass**:
der zweite Sensor magnetisch mit der Bewegungsführung gekoppelt ist.

2. Abtastvorrichtung nach dem vorhergehenden Anspruch, wobei die Bewegungsführung mindestens eine Rollführung (40) umfasst.

3. Abtastvorrichtung nach einem vorhergehenden Anspruch, wobei die Bewegungsführung mindestens einen Magneten (10) umfasst.

4. Abtastvorrichtung nach Anspruch 3, wobei der mindestens eine Magnet 4 Magnete (10, 10') umfasst.

5. Abtastvorrichtung nach einem vorhergehenden Anspruch, wobei das Abtastvermögen der Abtastvorrichtung durch Kombinieren oder Interpolieren von Signalen oder durch Umschalten zwischen Signalen von dem ersten und dem zweiten Sensor justiert werden kann.

6. Abtastvorrichtung nach einem vorhergehenden Anspruch, wobei der zweite Sensor zur äußeren Umgebung abgedichtet ist.

7. Abtastvorrichtung nach einem vorhergehenden Anspruch, wobei der erste Sensor zur äußeren Umgebung abgedichtet ist.

8. Abtastvorrichtung nach einem vorhergehenden Anspruch, wobei die Abtastvorrichtung derart gestaltet ist, dass ein Signal, das durch die Abtastvorrichtung erzeugt wird, die Bewegung einer Angelleine darstellt, wobei das Signal ein analoges elektrisches Signal ist.

9. Bissdetektor (110), die Abtastvorrichtung nach einem vorhergehenden Anspruch umfassend.

10. Bissdetektor nach Anspruch 9, wobei der Bissdetektor einen Schnellentriegelungszapfen (160) zum Koppeln an einen ersten Rutenhalter umfasst, wobei der Bissdetektor dafür gestaltet ist, mittels Schrauben an einen zweiten Rutenhalter statt an den ersten Rutenhalter gekoppelt zu werden.

11. Bissdetektor nach einem der Ansprüche 9 oder 10, wobei der Bissdetektor dafür gestaltet ist, mindestens eines des Folgenden zu sein: abgedichtet, schwimmfähig und beim Treiben in Wasser selbstaufrichtend.

12. Bissdetektor nach einem der Ansprüche 9 bis 11, wobei der Bissdetektor einen Hauptteil umfasst, der ausgeformte Zellen umfasst, wobei die ausgeformten Zellen eingeschachtelte Fächer umfassen.

## Revendications

1. Dispositif de captage pour détecter un mouvement d'une ligne de pêche pour un détecteur de touche (110), le dispositif de captage comprenant :
un premier capteur (20) ;
un logement (120) entourant le premier capteur ; et
un guide mobile (40) conçu pour entrer en contact avec une ligne de pêche (50),
le premier capteur étant couplé magnétiquement à, ou configuré pour surveiller optiquement, le guide mobile,
et le premier capteur étant configuré pour détecter un mouvement du guide mobile, le dispositif de captage comprenant en outre un deuxième capteur (30), et le deuxième capteur comprenant un capteur de vibration piézoélectrique (35) ;
**caractérisé en ce que** :
le deuxième capteur est couplé magnétiquement au guide mobile.

2. Dispositif de captage selon la revendication précédente, dans lequel le guide mobile comprend un guide de roulement (40).

3. Dispositif de captage selon l'une quelconque des revendications précédentes, dans lequel le guide mobile comprend au moins un aimant (10).

4. Dispositif de captage selon la revendication 3, dans lequel l'au moins un aimant comprend 4 aimants (10, 10').

5. Dispositif de captage selon l'une quelconque des revendications précédentes dans lequel la sensibilité du dispositif de captage peut être ajustée en combinant ou en interpolant des signaux, ou en commutant entre des signaux, du premier et du deuxième capteur.

6. Dispositif de captage selon l'une quelconque des revendications précédentes dans lequel le deuxième capteur est isolé de façon hermétique de l'environnement extérieur.

7. Dispositif de captage selon l'une quelconque des revendications précédentes, dans lequel le premier capteur est isolé de façon hermétique de l'environnement extérieur.

8. Dispositif de captage selon l'une quelconque des revendications précédentes, le dispositif de captage étant configuré de telle sorte qu'un signal produit par le dispositif de captage soit représentatif du mouvement d'une ligne de pêche, le signal étant un signal électrique analogique.

9. Détecteur de touche (110) comprenant le dispositif de captage selon l'une quelconque des revendications précédentes.

10. Détecteur de touche selon la revendication 9, dans lequel le détecteur de touche comprend un raccord à libération rapide (160) pour un couplage à un premier pique, le détecteur de touche étant configuré pour un couplage par vis à un deuxième pique à la place du premier pique.

11. Détecteur de touche selon l'une quelconque de la revendication 9 ou la revendication 10, dans lequel le détecteur de touche est configuré pour être isolé de façon hermétique et/ou flottable et/ou auto-redressant lorsqu'il flotte dans l'eau.

12. Détecteur de touche selon l'une quelconque des revendications 9 à 11, dans lequel le détecteur de touche comprend un corps comprenant des cellules moulées, les cellules moulées définissant des compartiments imbriqués.
